# EUROPEAN PATENT APPLICATION

(11) **EP 1 223 405 A1**
(43) Date of publication of application: **17.07.2002**
(21) Application number: 02250144.9
(22) Date of filing: 09.01.2002
(51) Int. Cl.: G01B 5/20, G01B 3/30

(54) **Method and apparatus for measuring the trailing edge thickness of a turbine airfoil**

(30) Priority: 16.01.2001 US 760293
(71) Applicant: GENERAL ELECTRIC COMPANY, Schenectady, NY 12345 (US)
(72) Inventor: Hofer, Douglas Carl, Clifton Park, New York 12065 (US); Maddaus, Alan Donn, Rexford, New York 12148 (US); Fournier, Maurice D., Hermon, Maine 04419 (US); Mollo, Nicholas Joseph, Clifton Park, New York 12065 (US); Shapiro, David Elliot, Pittsburgh, Pennsylvania 15243 (US)
(74) Representative: Pedder, James Cuthbert

(57) **Abstract**

An apparatus (10) for measuring the trailing edge (30) thickness of an airfoil in a turbine includes a plurality of tools; each tool having a main body portion (16) and a forward end (14); an opening (18) along a side edge (20) and in proximity to a forward edge (22) of the forward end (14), the opening (18) including a slot (26) of predetermined width (C) adapted to engage the trailing edge of the airfoil; wherein each of the tools has a different predetermined slot width.

A corresponding method includes the steps of:
a) providing a tool having an opening including a slot having a predetermined width,
b) aligning the tool to receive the trailing edge in the opening,
c) determining if a match exists between the trailing edge and the slot width,
d) if no match, repeating steps a) through c) with a tool having a different predetermined slot width until a match is found, and
e) recording the size of the tool, as the trailing edge thickness.

## Description

This invention relates to turbine or compressor nozzle and bucket airfoils. More particularly, it relates to a method and apparatus (i.e., tooling) for measuring the thickness of trailing edges of airfoils.

Turbine buckets and stationary nozzles generally have highly sculptured complex surface geometries which must be manufactured to meet precise engineering characteristics. Tolerances are tightly specified in order to meet performance requirements. Airfoil trailing edge thickness has a significant impact on performance of steam and gas turbines and compressor, related to blockage of airflow through airfoil passages. The trailing edge thickness of an airfoil can be determined by direct micrometer measurement or by analyzing probe center points taken on a section-by-section basis from a coordinate measuring machine (CMM). The CMM approach is computationally intensive and is highly dependent upon accurate probe touch points.

U.S. Patent No. 5,521,847 to Ostowski et al., assigned to the present assignee, discloses a method and system for determining airfoil characteristics from coordinate measuring machine probe center data. A CMM measures external coordinates along an airfoil and sends the coordinates to a computer for sorting and ordering a plurality of probe center points along a plurality of sections along the airfoil.

The CMM approach must be applied at the component level, i.e., prior to machine assembly, and therefore it is not applicable to field or assembled component use. Likewise, the micrometer measurement method is not feasible for airfoils with small (<0.5 inch) throat dimensions. Thus, there is a need for a simple portable apparatus and method for measuring trailing edge thickness of bucket and nozzle airfoils in factory as well as field environments.

According to the present invention, a method and apparatus for measuring the trailing edge thickness of nozzle and bucket airfoils of a turbine in an assembled state is described. The apparatus includes a set of tools or gauges, each constructed as an elongated planar member having a main body portion and a forward end portion of lesser width than the main body portion. The tool is formed with an opening along a side edge thereof, in relatively close proximity to a forward edge. The opening may be described as a slotted hole, the hole portion having a diameter that is intersected by a slot having a predetermined width that is smaller than the diameter of the hole. The slot lies between the side edge and the hole, thus providing an entry or access to the hole.

The opposite end of the main body portion may be provided with a hole for attachment of the tool to a ring or hook or the like, to thus facilitate carrying of the tool or tools.

The shape of the tool is such that it can be easily applied to the trailing edges of airfoils already assembled on a rotor wheel. The slotted hole is adapted to receive and engage the trailing edge of the airfoil, such that the tip engages the edge of the hole remote from the slot. The user applies various of the tools to the trailing edge of the airfoil on a trial and error basis, seeking to match a particular slot width to the trailing edge thickness.

Thus, in the event of an initial mismatch between the trailing edge and the slot width of a particular tool, a different tool having a differently sized slot width is made to engage the trailing edge of the airfoil. This process is repeated until a best match is identified. Upon identifying the best match, the size of the tool so selected is recorded as the actual trailing edge thickness of the airfoil.

The apparatus as described herein may also be used for estimating loss in performance of the turbine engine using the measured thickness of the trailing edge of the airfoil. A computer with appropriate software and hardware may be used to estimate this loss in performance of the turbine engine by considering the change in measured trailing edge thickness of an airfoil over time.

In another embodiment, the forward end of the tool is detachably fixed to a rearward end, the latter adapted to receive forward ends having differently sized slot widths.

In still another embodiment, the forward end of the tool may be made adjustable to alter the slot width.

Accordingly, in its broader aspects, the present invention provides a tool for measuring the trailing edge thickness of an airfoil in a turbine, comprising a substantially planar member having a forward end, a forward edge and a side edge; and a slot having a predetermined width disposed along the side edge, proximate to the forward edge; an opening including a slot of predetermined width adapted to engage the trailing edge of the airfoil.

In another aspect, the invention provides an apparatus for measuring the trailing edge thickness of an airfoil in a turbine, comprising a plurality of tools; each tool having a main body portion and a forward end; an opening along a side edge and in proximity to a forward edge of the forward end, the opening including a slot of predetermined width adapted to engage the trailing edge of the airfoil; wherein each of the tools has a different predetermined slot width.

In still another aspect, the present invention provides apparatus for assessing a loss in performance of a turbine due to blockage of airflow through airfoil passages, the turbine engine including an airfoil having a trailing edge, the apparatus comprising a tool for measuring the thickness of the trailing edge of the airfoil; and means for estimating the loss in performance of the turbine engine using the measured trailing edge thickness of the airfoil.

In still another aspect, the present invention provides an apparatus for assessing the loss in performance of a turbine, the turbine including an airfoil having a trailing edge, the apparatus comprising a plurality of tools adapted to measure varying trailing edge thicknesses; the tools having respective openings including slots of different predetermined widths, for determining the thickness of the trailing edge of the airfoil; and means for analyzing trailing edge thickness data obtained from the tools.

In yet another aspect, the present invention provides a method for determining the trailing edge thickness of an airfoil in a turbine, comprising the steps of:
a) providing a tool having an opening including a slot having a predetermined width, the opening adapted to receive the trailing edge of the airfoil;
b) aligning the tool to receive the trailing edge of the airfoil in the opening;
c) determining if a match exists between the trailing edge and the slot width;
d) if no match, repeating steps a) through c) with a tool having a different predetermined slot width until a match is found; and
e) recording the size of the tool, as identified by the predetermined slot width, as the actual trailing edge thickness of the airfoil.

The invention will now be described in greater detail, by way of example, with reference to the drawings, in which:-
FIGURE 1 is a side schematic view of a nozzle and bucket airfoil trailing edge thickness measurement tool according to the present invention;
FIGURE 2 illustrates a view of fitting the trailing edge thickness measurement tool of the present invention to the trailing edge of an airfoil in order to assess the trailing edge thickness;
FIGURE 3A illustrates a tool in accordance with another embodiment of the invention wherein the end of the tool is detachably fixed to a rearward end of the tool;
FIGURE 3B illustrates still another embodiment of the invention wherein the slot width is adjustable to accommodate airfoils of varied trailing edge thicknesses; and
FIGURE 4 shows a block diagram of a measurement system including a computer that analyzes the trailing edge thickness measurement data for assessing the loss in performance of a turbine.

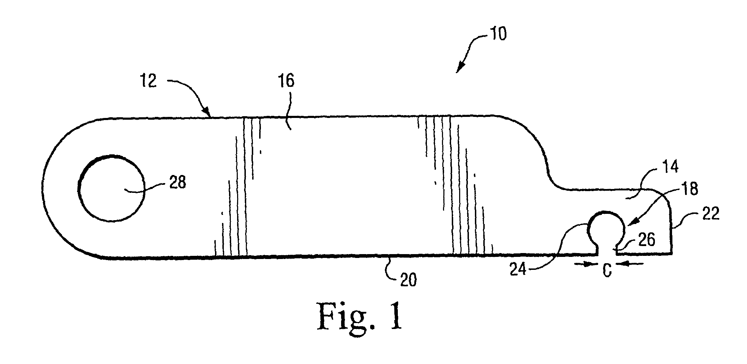

Figure 1 illustrates a nozzle and bucket airfoil trailing edge thickness measurement gauge or tool 10 constructed as a single unit. The tool includes an elongated, relatively thin planar member 12 having a forward end of lesser width than the remaining main body portion 16. The tool is formed with an opening 18 along a side edge 20, in relatively close proximity to a forward edge 22. Opening 18 is shaped as a hole intersected by a slot. Specifically, the hole 24 is located inwardly of the edge 20 and is intersected by a slot 26 that provides entry or access to the hole. The slot 26 has a width C that is less than the diameter of the hole 24. This arrangement facilitates insertion of the trailing edge of an airfoil as described further herein.

The opposite end of member 12 may be provided with a hole 28 for attaching the tool (and similar tools) to a ring, hook or the like.

In accordance with one embodiment of the invention, several similar tools are provided as a set, each tool having a different predetermined slot width that would typically be clearly indicated on the respective tool.

A set of such tools, with obvious portability, provides a quick and efficient means for measuring bucket and nozzle airfoil trailing edge thickness in a preassembled stage, or in an assembled, in-the-field stage.

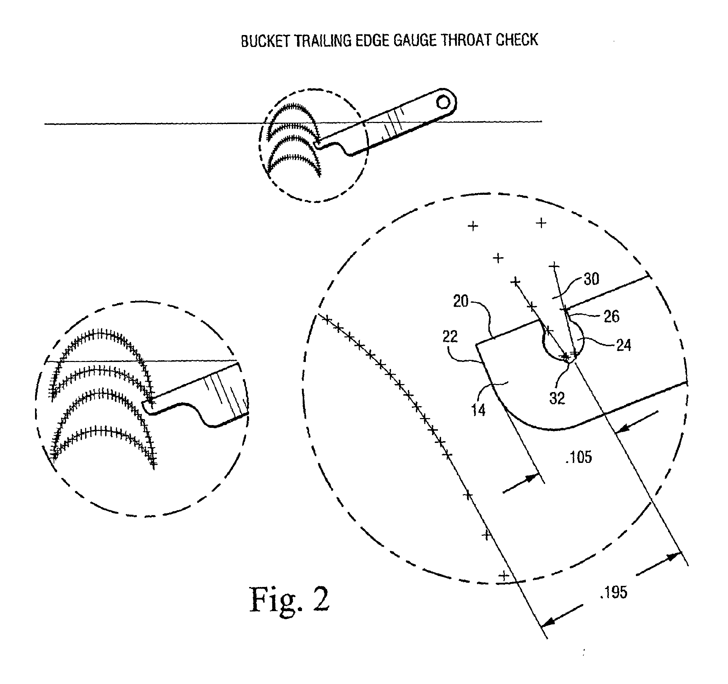

Figure 2 illustrates how the tool of the present invention may be fitted to the trailing edge of an airfoil in order to assess the trailing edge thickness. As indicated above, a set of tools with different slotted hole sizes and corresponding slot widths, are utilized on a trial and error basis. For example, a first measurement tool 10 (as illustrated in Figure 1) of a selected and predetermined slot width is inserted over the airfoil trailing edge 30 until the tip 32 engages the back end of the hole, i.e., the edge of the hole opposite the slot. In the event of a match between the thickness of the trailing edge 30 and the slot width when the trailing edge 30 is fully engaged within the hole 24, the slot width C is considered to be the closest approximation of the thickness of the trailing edge 30, and the size of the tool or gauge 10 is then recorded as the actual thickness of the trailing edge 32 of the airfoil. Note that the incorporation of hole 24 remote from the slot entry allows the tool to be properly oriented about the trailing edge.

In the event of a mismatch between the thickness of a trailing edge 30 and the slot width, a second tool similar to the one illustrated in Figure 1 but having a different slot width is inserted over the trailing edge 30 as described above. The described trial and error method is iterated until the user identifies a particular tool that best matches the thickness of the trailing edge 30.

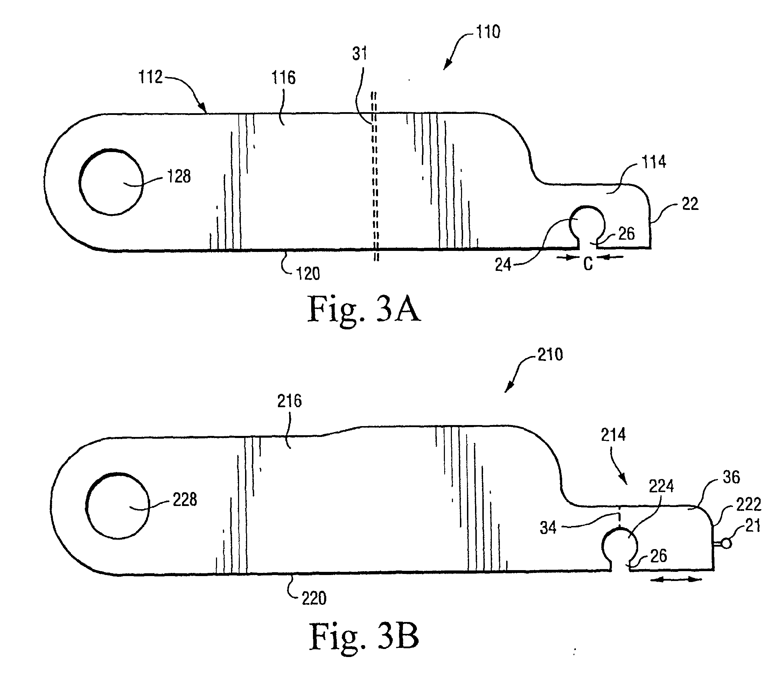

Referring to Figure 3A, a second embodiment is illustrated where elements in common with the tool of Figure 1 are indicated by similar reference numerals, but with the prefix "1" added. Here, the forward end 114 of the tool 110 is detachable, as indicated schematically by the dotted line 31. This arrangement facilitates replacement of the detachable forward end 114 with another similar end having a differently sized slotted hole and corresponding slot width C. The tool 110, with various interchangeable forward ends, is used as described above.

In still another embodiment shown in Figure 3B, a forward end is provided that permits adjustment of the slot width. Here again, for elements in common with the tool in Figure 1, similar reference numerals are employed, but with the prefix "2" added. In this embodiment, the forward end 214 is constructed in two parts, as indicated schematically by the dotted line 34. Thus, a discrete and forwardmost end element 36 may slide relative to a fixed portion of the forward end 214 to thereby adjust the width of the slot 226, thus allowing a user to readily adapt the tool 210 to receive airfoils having different trailing edge thicknesses. In this embodiment, slot width indicator means would be added to the tool, or the adjusted width could be measured by a caliper or the like.

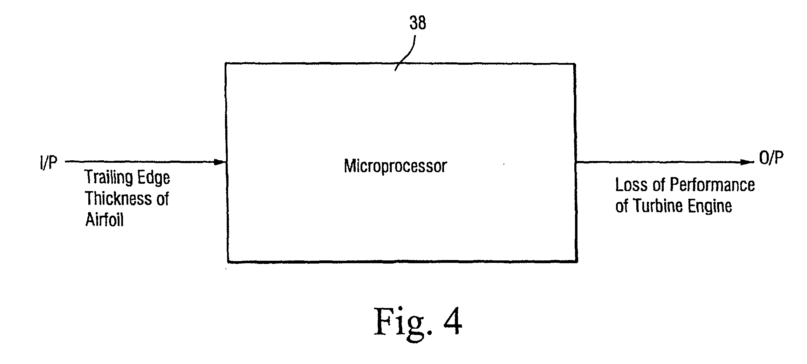

Figure 4 shows a block diagram of apparatus for assessing loss of turbine performance. The apparatus includes a computer having a microprocessor 38 that analyzes trailing edge thickness data obtained through application of the tool(s) described hereinabove. Through the utilization of appropriate software, turbine performance degradation can be assessed as a function of decreasing trailing edge thickness over time.

## Claims

1. A tool (10) for measuring the trailing edge thickness of an airfoil in a turbine, comprising:
a substantially planar member (12) having a forward end (14), a forward edge (22) and a side edge (20); and
a slot (26) having a predetermined width disposed along said side edge (20), proximate to said forward edge;
an opening (18) including a slot of said predetermined width adapted to engage the trailing edge (30) of the airfoil.

2. The tool of claim 1 further comprises means (21) for varying said slot width (C) in order to accommodate airfoils having varying trailing edge thicknesses.

3. The tool of claim 1 or 2 wherein said forward end is detachable from said planar member (12).

4. The tool of claim 1, 2 or 3 wherein said slot opens into a hole having a diameter greater than said slot width (C).

5. An apparatus for measuring the trailing edge thickness of an airfoil in a turbine, comprising:
a plurality of tools;
each tool having a main body portion (16) and a forward end (14);
an opening (18) along a side edge (20) and in proximity to a forward edge (22) of said forward end (14), said opening (18) including a slot (26) of predetermined width (C) adapted to engage the trailing edge (30) of the airfoil; wherein each of said tools has a different predetermined slot width.

6. The tool of claim 5 wherein said forward end (14) is detachable from said planar member (12).

7. The tool of claim 5 or 6 wherein said forward end (14) has a width less than said main body portion (16).

8. Apparatus for assessing a loss in performance of a turbine due to blockage of airflow through airfoil passages, said turbine engine including an airfoil having a trailing edge (30), the apparatus comprising:
a tool (10) for measuring the thickness of said trailing edge of the airfoil; and
means (38) for estimating the loss in performance of said turbine engine using the measured trailing edge thickness of said airfoil.

9. An apparatus for assessing the loss in performance of a turbine, said turbine including an airfoil having a trailing edge (30), the apparatus comprising:
a plurality of tools adapted to measure varying trailing edge thicknesses;
said tools having respective openings (18) including slots (26) of different predetermined widths (C), for determining the thickness of the trailing edge (30) of the airfoil; and
means (38) for analyzing trailing edge thickness data obtained from said tools.

10. A method for determining the trailing edge thickness of an airfoil in a turbine, comprising the steps of:
a) providing a tool (10) having an opening (18) including a slot (26) having a predetermined width (C), said opening adapted to receive the trailing edge (30) of the airfoil;
b) aligning said tool to receive said trailing edge of the airfoil in said opening;
c) determining if a match exists between said trailing edge (30) and said slot width (C);
d) if no match, repeating steps a) through c) with a tool having a different predetermined slot width until a match is found; and
e) recording the size of said tool, as identified by said predetermined slot width, as the actual trailing edge thickness of the airfoil.

11. The method of claim 10 further including assessing loss in performance of said turbine due to trailing edge blockage of air flow, by analyzing trailing edge thickness data of said airfoil over time.

12. The method of claim 11 wherein the step of assessing the loss of performance is determined by a microprocessor (38).
